# EUROPÄISCHE PATENTSCHRIFT

(11) **EP 3 142 818 B1**
(45) Veröffentlichungstag und Bekanntmachung des Hinweises auf die Patenterteilung: **04.10.2023**
(21) Anmeldenummer: 15736173.4
(22) Anmeldetag: 05.05.2015
(51) Int. Cl.: B23B 31/113

(54) **MODULARE SCHNITTSTELLE FÜR WERKZEUGE**
MODULAR INTERFACE FOR TOOLS
INTERFACE MODULAIRE POUR OUTILS

(30) Priorität: 15.05.2014 DE 102014007056
(43) Veröffentlichungstag der Anmeldung: 22.03.2017
(73) Patentinhaber: Benz GmbH, Werkzeugsysteme, 77716 Haslach (DE)
(72) Erfinder: ZELLER, Christoph, 77756 Haslach (DE); GIEßLER, Wilhelm, 77790 Steinach (DE); NEUMANN, Andreas, 77723 Gengenbach (DE); GANTER, Simon, 79215 Elzach (DE); GEISSELMANN, Thomas, 77716 Fischerbach (DE)
(74) Vertreter: Hoffmann Eitle
(86) Internationale Anmeldenummer: PCT/DE2015/000216
(87) Internationale Veröffentlichungsnummer: WO 2015/172760

(56) Entgegenhaltungen:
- WO-A1-2010/089405
- DE-B4-102010 026 129
- US-A- 3 444 781
- US-A- 5 667 228

## Beschreibung

Die Erfindung betrifft eine Schnittstelle gemäß dem Oberbegriff des Anspruchs 1 aus einer ersten - ein Werkzeug oder einen Werkzeughalter haltenden - Baugruppe und einer zweiten - ein Bearbeitungselement tragenden - Baugruppe, wobei die erste Baugruppe zum einen eine Ausnehmung besitzt, die mindestens einen kegelstumpfmantel- oder zylinderförmigen Abschnitt hat und zum anderen eine in axialer Richtung - in Richtung der zweiten Baugruppe - wirkende Anlagefläche oder Kontaktstelle aufweist und wobei die zweite Baugruppe einen Zapfen hat, der zum einen einen kegel-, kegelstumpf- oder zylinderförmigen Abschnitt zur Anlage am kegelstumpfmantel- oder zylinderförmigen Abschnitt der ersten Baugruppe besitzt und zum anderen mindestens eine in axialer Richtung wirkende Kontaktstelle oder Anlagefläche zur Kontaktierung der Anlagefläche oder Kontaktstelle der ersten Baugruppe aufweist. Eine solche Schnittstelle ist aus der WO 2010/089405 A1 bekannt.

Aus der DE 10 2010 026 129 B4 ist eine Schnittstelle bekannt. In der Ausnehmung der ersten Baugruppe ist ein ringförmiges Schalthebelelement längsverschiebbar oder schwenkbar angeordnet. Das Schalthebelelement hat mindestens ein - die zweite Baugruppe anlenkendes - Anlenkelement. Die zweite Baugruppe hat mindestens ein Hintergriffselement, das durch eine Schwenkbewegung der zweiten Baugruppe hinter das Anlenkelement des Schalthebelelements bringbar ist. Die Baugröße einer Schnittstelle mit einem derartigen Schalthebelelement ist hervorragend geeignet für größere Schnittstellen. Mit zunehmender Miniaturisierung der Schnittstelle nimmt die Eilgensteifigkeit des Schalthebelelements jedoch schnell ab.

Aus der WO 2010/089405 A1 ist eine Kupplung zum Koppeln einer Werkzeugwelle mit einer Maschinenwelle bekannt, bei der eine sicherere, leicht lösbare axiale Klemmung und eine sichere Schneidenorientierung erreicht werden kann und auch Werkzeuge mit einer Schraubverbindung verwendet werden können. Die Maschinenwelle weist eine Hülse mit einer zentralen Bohrung zur Aufnahme eines komplementären Endes der Werkzeugwelle auf. Die Hülse hat eine ebene Außenkante und einen Innenabschnitt zum Zentrieren des Werkzeugschafts sowie einen zweiten außen angeordneten Abschnitt mit gegenüberliegenden Sektoren mit eingelassenen schrägen Rampen. Die Werkzeugwelle ist bajonettartig in der Maschinenwelle arretierbar, wobei die Werkzeugwelle mit ihrem ebenen Flansch gegen die ebene Kante der Hülse und bildet so eine dichte, starre Einheit, die hohen Drehmomenten standhält, die sich aus der Schneidarbeit ergeben.

Der vorliegenden Erfindung liegt das Problem zugrunde, eine Schnittstelle aus einer ersten Baugruppe und einer zweiten 15 Baugruppe zu entwickeln, die bei jedem Werkzeugwechsel - trotz geringer Schnittstellengröße - eine einfache Handhabung bei einer hohen Wiederholgenauigkeit bezüglich der Position der zweiten Baugruppe gegenüber der ersten Baugruppe gewährleistet.

Das Problem wird mit den Merkmalen des Patentanspruchs 1 gelöst. Zwischen der Ausnehmung und dem Zapfen ist ein bajonettartiger Verschluss mit mindestens einem am Zapfen vorhandenen Steg angeordnet. In der ersten Baugruppe ist ein Spannelement angeordnet, dessen vorderes Ende beim Spannen an einem der Stege zur Anlage kommt. Bevorzugte Ausführungsformen der Erfindung ergeben sich aus den Unteransprüchen.

Mit der Erfindung wird eine zweite Baugruppe gegenüber einer ersten Baugruppe verdrehsicher positioniert und wiederholgenau eingespannt. Dazu verklemmen sich beide - eine Schnittstelle bildende - Baugruppen ineinander. Da die Baugruppen sehr kleine Bauteile sind, ihr maximaler Durchmesser misst im Ausführungsbeispiel nur 22 mm, können, um brauchbare Klemmkräfte zu erzeugen, keine feinmechanischen Getriebeteile eingesetzt werden. Die wenigen zu benutzenden Einzelteile müssen jeweils eine so hohe Formsteifigkeit haben, dass die Klemmkraft im Betrieb erhalten bleibt.

Die Lösung ist ein bajonettartiger Verschluss. Die zweite Baugruppe, die in die erste Baugruppe hineinsteckbar ist, trägt radial abstehende Elemente wie Stege, Bolzen, Zapfen oder dergleichen. Die erste Baugruppe hat entsprechende Ausnehmungen oder Hintergriffe, in die die abstehenden Elemente beim Kuppeln der beiden Baugruppen unter mindestens einer translatorischen und/oder rotatorischen Bewegung ineinandergreifen. Die abstehenden Elemente kontaktieren die Ausnehmungen oder Hintergriffe beispielsweise in punkt-, linien- oder flächenförmigen Kontakten. In der ersten Baugruppe ist ferner ein Spannelement untergebracht, mit dessen Hilfe die Kuppelbewegung unterstützt und/oder die Kupplung arretiert wird. Ggf. kann mit dem z.B. manuell bedienbaren Spannelement auch der Entkuppelvorgang eingeleitet werden.

Die abstehenden Elemente und die Ausnehmungen oder Hintergriffe sind gegenseitig so angeordnet, dass beim Entkuppeln die zweite Baugruppe aus der ersten nach einem ersten Entklemmen oder Lösen der Kupplung nicht unmittelbar herausfallen kann. Zum kompletten Trennen der Baugruppen ist ein weiterer Handgriff erforderlich.

In den Ausführungsbeispielen ist die erste Baugruppe ein rotierender Spindelkopf eines Werkzeugwechselaggregats. Die zweite Baugruppe stellt einen werkzeugtragenden Werkzeughalter dar. Selbstverständlich kann die erste Baugruppe auch ein nicht rotierender Werkzeugträger sein, wie er z.B. als Stahlhalter eines Oberschlittens einer konventionellen Drehmaschine verwendet wird. Die zweite Baugruppe ist in diesem Fall der in einem Werkzeughalter angeordnete Drehstahl als Werkzeug oder Schneidenträger.

Weitere Einzelheiten der Erfindung ergeben sich aus den Unteransprüchen und den nachfolgenden Beschreibungen von schematisch dargestellten Ausführungsformen.
- Figur 1:: Perspektivische Ansicht einer Schnittstelle aus einem Spindelkopf und einem Werkzeughalter;
- Figur 2:: wie Figur 1, jedoch um 180° geschwenkt;
- Figur 3:: Längsschnitt durch die im Gehäuse eines Werkzeugaggregats gelagerte Schnittstelle;
- Figur 4:: Unteransicht des Werkzeughalters;
- Figur 5:: Unteransicht des Spindelkopfs;
- Figur 6:: Seitenansicht des Werkzeughalters;
- Figur 7:: Perspektivische Ansicht der Exzenterschraube aus Figur 3;
- Figur 8:: Perspektivische Ansicht der Spannzange aus Fig. 3;
- Figur 9:: Perspektivische Ansicht des Spannschraubrings aus Figur 3;
- Figur 10:: Querschnitt durch die Schnittstelle im Bereich der Exzenterschraube;
- Figur 11:: Längsschnitt durch die Schnittstelle im Bereich der Exzenterschraube;
- Figur 12:: Abwicklung des Werkzeughalters oberhalb der Abwicklung des Spindelkopfs, wobei die Abwicklungen jeweils dem Mantel eines in der Schnittstellentrennfuge gelegenen, geraden Zylinders entspricht;
- Figur 13:: In die Abwicklung des Spindelkopfs eingeschobene Abwicklung des Werkzeughalters;
- Figur 14:: In die Abwicklung des Spindelkopfs seitlich verschobene Abwicklung des Werkzeughalters;
- Figur 15:: Einschwenken der Exzenterschraube;
- Figur 16:: In der Abwicklung des Spindelkopfs wird die Abwicklung des Werkzeughalters durch Schwenken der Exzenterschraube verschoben;
- Figur 17:: Durch Schwenken der Exzenterschraube wird die Abwicklung des Werkzeughalters festgeklemmt;
- Figur 18:: Herausschwenken der Exzenterschraube zum gegenseitigen Lösen der Abwicklungen;
- Figur 19:: Radiales Lösen und herausfallsicheres Einhängen;
- Figur 20:: Radiales Herausnehmen der Abwicklung des Werkzeughalters aus der Abwicklung des Spindelkopfs;
- Figur 21:: Perspektivische Ansicht der Schnittstelle mit festgeklemmten Werkzeug;
- Figur 22:: Perspektivische Ansicht des Spindelkopfs.

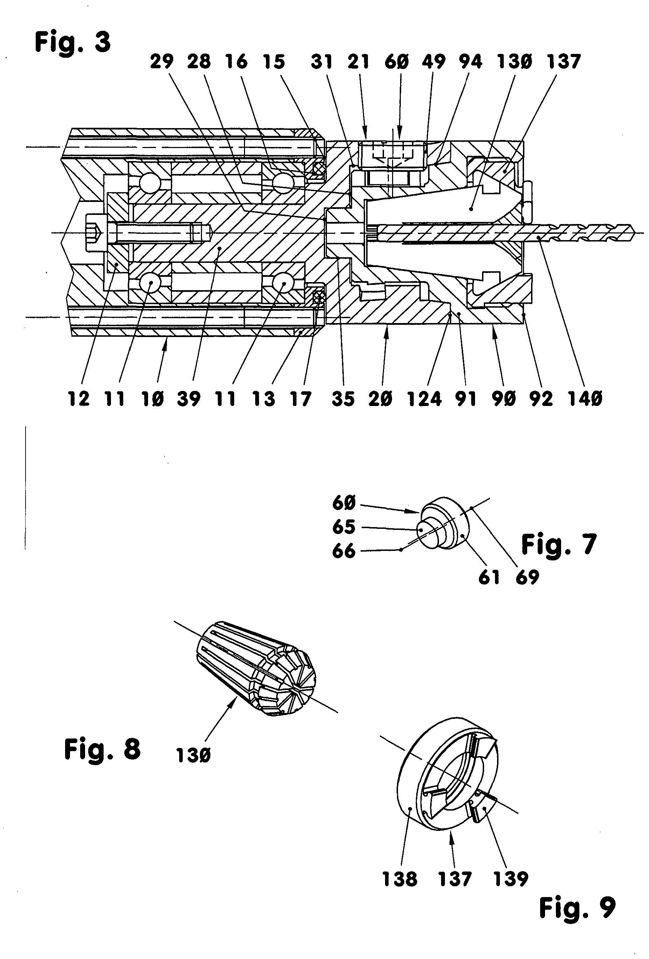

Die Figur 3 zeigt den vorderen Teil eines Werkzeugaggregats. Aus dessen Gehäuse (10) ragt ein Spindelkopf (20) als erste Baugruppe einer modularen Schnittstelle heraus. Im Spindelkopf (20) sitzt auswechselbar ein Werkzeughalter (90) als zweites Bauteil der modularen Schnittstelle. Der Werkzeughalter (90) trägt als Werkzeug (140) z.B. einen Spiralbohrer.

Das Gehäuse (10) und der Deckel (13) lagern das hintere Ende des Spindelkopfes (20) in zwei in einer in O-Anordnung angeordneten Schulterkugellagern (11). Die Außenringe der Schulterkugellager (11) sitzen axial fixiert zwischen dem Gehäuse (10) und dem Deckel (13). Die auf dem Schaft (39) des Spindelkopfs (20) gelagerten Innenringe der Lager (11) sitzen axial verspannt zwischen einer Spindelkopfschulter (25) und einer zentral am Spindelkopf (20) axial verschraubten, im Innenring des kontaktierten Schrägschulterlagers (11) zentrierten Halteplatte (12).

Der Deckel (13) des Gehäuses (10) weist an seiner Vorderseite seiner großteils planen Stirnfläche (15) eine Ringnut (16) auf, in der ein an der rückwärtigen planen Bundfläche (26) des Spindelkopfes (20) anliegender Dichtring (17) eingelegt ist.

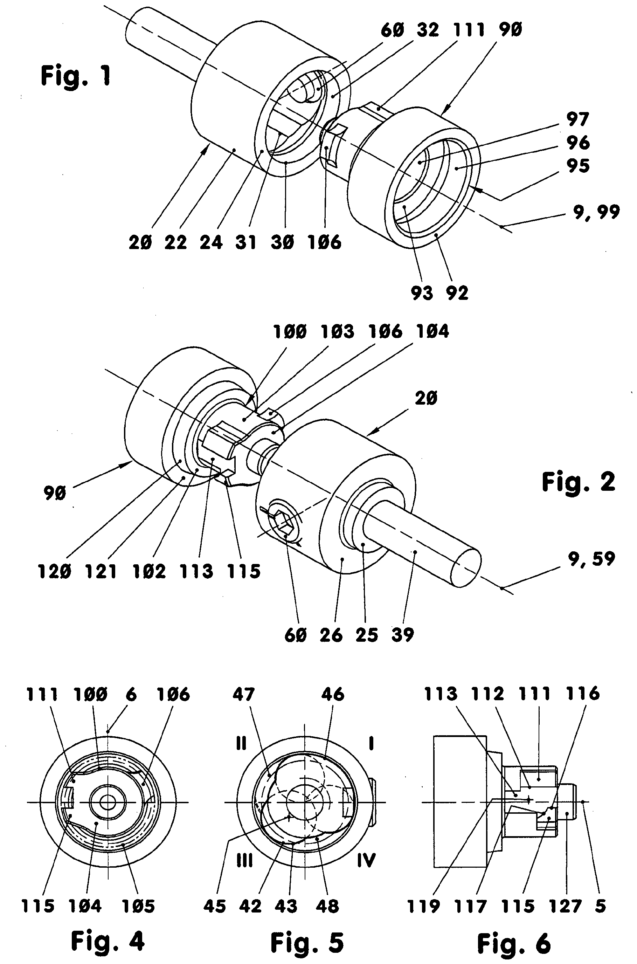

Aus dem Spindelkopf (20) ragt vorn ein rohrförmiger Spanngetriebeabschnitt (21) aus dem Gehäuse (10) heraus. Dieser Spanngetriebeabschnitt (21) hat z.B. eine zylindrische Außenwandung (22), vgl. Figur 1, eine profilierte Innenwandung (31) - als Teil einer einen Werkzeughalter (90) aufnehmenden Ausnehmung (30) - und eine vordere z.B. plane Stirnfläche (124). Die Tiefe des Spanngetriebeabschnitts (21) beträgt bei einem Spindelkopf (20) mit z.B. 22 mm Außendurchmesser 11,7 mm, während seine mittlere Wandstärke z.B. 4 mm misst. Die Innenwandung (31) endet z.B. vor einer planen Zwischenbodenfläche (28), in der sich eine zylindrische Bohrung (35) anschließt. Diese Bohrung (35) hat hier z.B. einen Durchmesser von 6 mm. Die Tiefe der Bohrung (35) beträgt ca. 2,8 mm. Die Bohrung (35) endet in einer planen Bodenfläche (29).

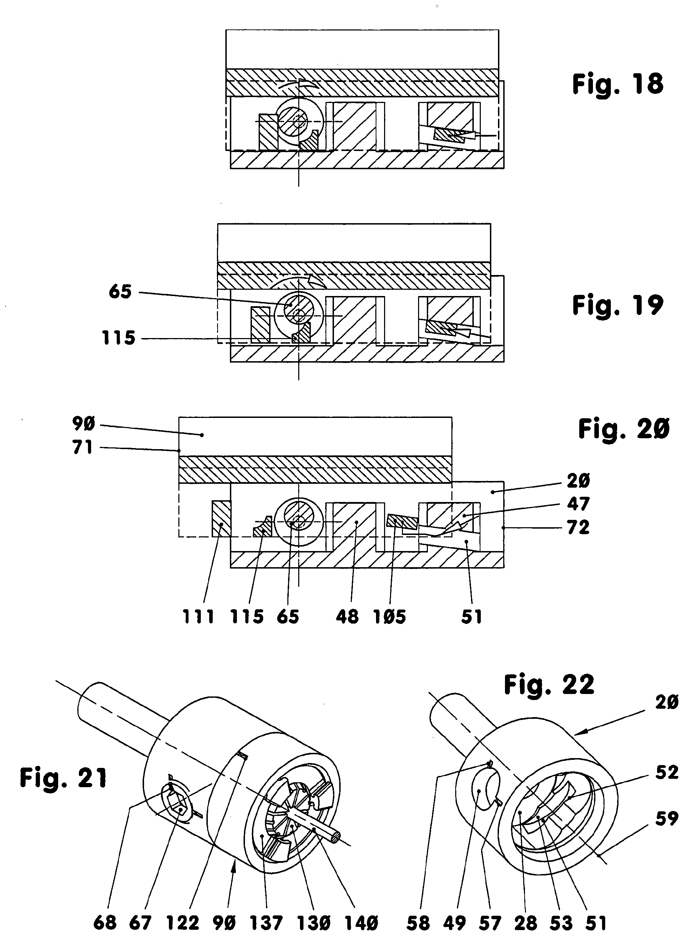

Der Spanngetriebeabschnitt (21) des Spindelkopfes (20) weist z.B. eine radiale Gewindebohrung (49) auf, vgl. Figur 21. Nach Figur 3 hat die Gewindebohrung (49) z.B. das Feingewinde M 8 x 0,5.

Die Innenwandung (31) basiert auf einer zentralen Bohrung, deren zylindrische Wandung einen Innendurchmesser von z.B. 12 mm misst, vgl. Figur 5. Im dritten Quadrant nach Figur 5 befindet sich eine erste Ausfräsung (42), deren Zylindermantel (43) den kompletten dritten Quadranten überdeckt. Ein Quadrant ist ein Begriff aus der Mathematik. Es ist ein durch zwei Koordinatenachsen begrenzter Abschnitt einer Zeichnungsebene. Vier Quadranten überdecken 360 Winkelgrade, wobei die Nullgradmarkierung im positiven Bereich der Abszisse des Koordinatensystems liegt. Die Winkelgradzählung erfolgt im Gegenuhrzeigersinn.

Die erste Ausfräsung (42) der Innenwandung (31) hat einen Radius von z.B. 4,5 mm. Ihre Mittellinie (45) ist 3,6 mm von der Mittellinie (59) entfernt. Sie liegt nach Figur 5 auf 225 Winkelgraden im dritten Quadranten. Eine zweite Ausfräsung (46) liegt gegenüber der ersten (42). Sie hat die Form eines sichelförmig gekrümmten Langlochs. Die Mittellinie des Langlochs liegt auf einem Kreis mit einem Radius von 4,1 mm. Der Bohrungsdurchmesser des Langlochs beträgt 4 mm. Die zweite Ausfräsung (46) überdeckt im Bereich der vollen Langlochbreite z.B. 116,6 Winkelgrade. Beide Ausfräsungen (42, 46) erstrecken sich parallel zur Mittellinie (59) zwischen der planen Zwischenbodenfläche (28) und dem Außenkonusabschnitt (120). Im zweiten Quadranten befindet sich zwischen den Ausfräsungen (42, 46) der Nutstollen (47). Ein weiterer Stollen, der Sperrstollen (48) ist zwischen den Ausfräsungen (46, 42) im vierten Quadranten angeordnet.

Im zweiten Quadranten nach Figur 5 befindet sich zwischen der ersten (42) und der zweiten Ausfräsung (46) eine Haltenut (51), vgl. auch Figur 21. Die Haltenut (51) hat eine Klemmflanke (52), die der Zwischenbodenfläche (28) gegenüberliegt. Sie ist beispielsweise ein Abschnitt einer Gewindenutflanke, deren Steigung z.B. 6 mm beträgt. Im Ausführungsbeispiel ist sie Teil eines Rechteckgewindes. Sie kann auch Teil eines Trapez-, Sägen-, Rund-, metrischen Gewindes oder dergleichen sein. Die Haltenut (51) überdeckt ca. 60 Winkelgrade des Umfanges der Innenwandung (31). Die maximale Haltenuttiefe beträgt z.B. 2,1 mm. Im Ausführungsbeispiel hat die Haltenut (51) eine nicht belastete Flanke (53), die z.B. 3 mm von der Klemmflanke (52) entfernt liegt. Ggf. kann sich die Haltenut (51) ohne die Flanke (53) bis zur Zwischenbodenfläche (28) erstrecken.

Nach Figur 22 ist die Haltenut (51) über die Ausnehmung (30) in den Spindelkopf (20) eingearbeitet, so dass die Außenwandung (22) geschlossen bleibt. Es ist jedoch auch möglich, die Haltenut (51) - von außen her - durch die Außenwandung (22) hindurch zu fertigen.

In die Gewindebohrung (49) des Spanngetriebeabschnitts (21) ist eine entsprechend mit einem Außengewinde ausgestattete Exzenterschraube (60) eingeschraubt. Sie hat ein in die Ausnehmung (30) hineinragendes vorderes Ende, das als Exzenterzapfen (65) ausgebildet ist, vgl. auch Figur 7. Letzterer hat bei einem Durchmesser von z.B. 4,8 mm eine zylindrische Außenfläche. Diese Außenfläche kann ggf. zumindest bereichsweise auch ballig, z.B. sphärisch gekrümmt sein. Die Exzentrizität des Exzenterzapfens (65) beträgt z.B. 0,875 ± 0,1 mm. Die Schwenkachse der Exzenterschraube (60) ist deren Mittellinie (69).

Die exzenterzapfenfreie Stirnseite der Exzenterschraube (60) hat eine Werkzeugausnehmung (67), vgl. Figur 20, mit z.B. einem sechskantförmigen Hohlquerschnitt. Zwischen der Werkzeugausnehmung (67) und dem Außengewinde der Exzenterschraube (60) erstreckt sich in radialer Richtung eine z.B. 0,5 mm tiefe Nut (68) oder Kerbe zur Markierung der Position der Exzenterwelle (61), vgl. Figur 2. Die Nut (68) sitzt nach Figur 2 unterhalb der Werkzeugausnehmung (67).

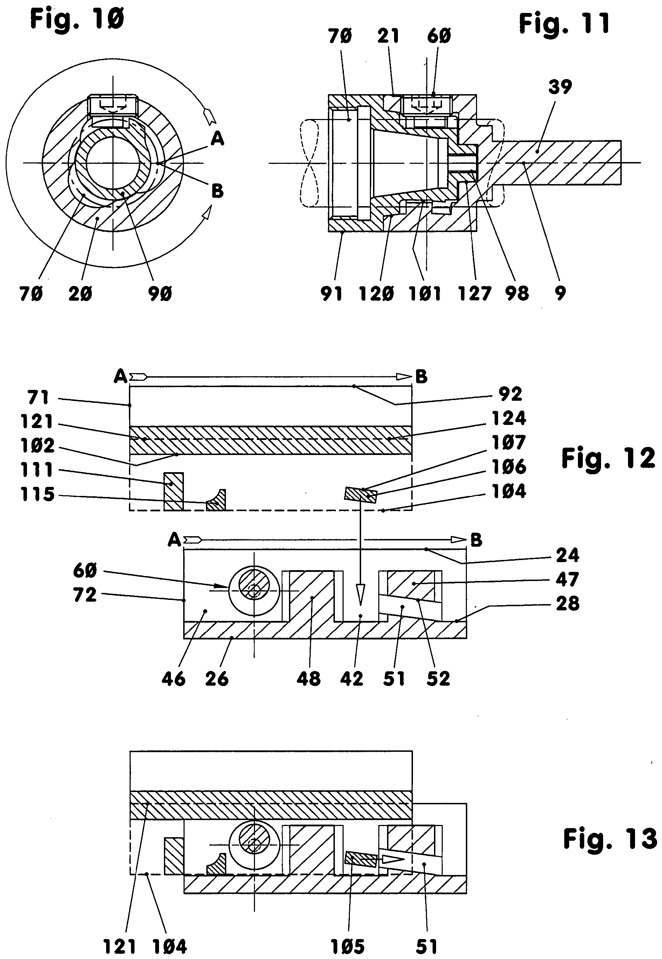

In der Ausnehmung (30) steckt der Werkzeughalter (90). Letzterer hat einen Flanschabschnitt (91), vgl. Figur 11, an dem ein Zapfen (100) angeformt ist. Dieser Zapfen (100) umfasst einen Außenkonusabschnitt (120), einen Verriegelungsabschnitt (101) und einen Endabschnitt (127). Der z.B. nahezu scheibenförmige Flanschabschnitt (91) hat hier eine zylindrische Außenfläche, deren Durchmesser hier z.B. geringfügig kleiner ist als der benachbarte Außendurchmesser des Spindelkopfes (20). Vorn hat der Flanschabschnitt (91) z.B. eine plane Stirnfläche (95), in deren Mitte eine Ausnehmung (95) zur Aufnahme einer Spannzange (130), eines anderen werkzeughaltenden Bauteils oder eines Werkzeugs selbst angeordnet ist. Hinten endet der Flanschabschnitt (91) in einer als plane Bundfläche ausgebildeten Anlagefläche (121). Die Außenfläche des Flanschabschnittes (91) weist in der Nähe der Bundfläche (121), vgl. Figur 21, eine Markierungsnut (122) auf.

Die Spannzangenausnehmung (95) in der Stirnfläche (92)umfasst im Wesentlichen einen Innengewindeabschnitt (96) und einen Innenkonusabschnitt (97). Der z.B. 6,5 mm tiefe Innengewindeabschnitt (96) weist z.B. das Feingewinde M18 x 1 auf. Der Innenkonusabschnitt (97) hat bei einem maximalen Innendurchmesser von 11 mm einen Kegelwinkel von z.B. 16 Winkelgraden. Er ist 12 mm tief. Er mündet in eine zentrale, z.B. 4,5 mm lange Durchgangsgewindebohrung (98), die ein M3-Gewinde aufweist. Alternativ kann anstelle der Durchgangsgewindebohrung (98) auch eine Durchgangsbohrung verwendet werden.

Die Rückseite des Flanschabschnittes (91) weist z.B. eine plane Stirnfläche (121) auf, die als Anlagefläche zur Kontaktierung des Spindelkopfes (20) dient. Die Stirnfläche (93) ist ggf. durch gerade oder ungerade Nuten in verschiedene Zonen aufgeteilt. Möglicherweise können die zueinander passend bearbeiteten Stirnflächen (24) und (121) kegelstumpfmantelförmig oder sphärisch gekrümmt ausgeführt sein. Der Kegelwinkel läge dann zwischen 170 und 190 Winkelgraden, während der Krümmungsradius größer 200 mm wäre.

Dem Flanschabschnitt (91) ist der Außenkonusabschnitt (120) nachgeschaltet. Letzterer kommt bei eingewechseltem Werkzeughalter (90) mit dem kegelstumpfmantelförmigen Abschnitt (32) des Spindelkopfes (20) in einen großflächigen Kontakt. Die Kontaktfläche wird als erste Montagefuge (124) definiert. Diese Montagefuge (124) kann ggf. auch die Form eines Zylindermantels haben. In der Schnittstelle liegt gleichzeitig die Bundfläche (121) des Werkzeughalters (90) an der vorderen Stirnfläche (24) des Spindelkopfes (20) ebenfalls, z.B. großflächig, an. Die dabei entstehende Kontaktfläche wird als zweite Montagefuge (94) bezeichnet.

Ggf. kann hier jeweils eine Anlagefläche auf eine oder mehrere punktuelle oder linienartige Kontaktstellen treffen. In diesem Fall hat beispielsweise der Spindelkopf (20) die plane Stirnfläche (24), während der Flanschabschnitt (91) des Werkzeughalters (90) z.B. eine einzelne Kontaktstelle aufweist. Selbstverständlich kann auch am Spindelkopf (20) die z.B. punktuelle Kontaktstelle und am Werkzeughalter (90) die vollflächige Bundfläche (121) sein.

An den Außenkonusabschnitt (120) schließt sich der Verriegelungsabschnitt (101) über die plane Bundfläche (121) an, vgl. auch Figuren 2 und 4. Der Verriegelungsabschnitt (101) ist auf einem Grundzylinder (103), der nur beispielsweise eine zylindrische Grundform hat, aufgebaut. Der Grundzylinder (103) hat beispielsweise eine Länge von 9 mm und einen Durchmesser von 11 mm, Er endet in einer ebenen Bodenfläche (104). Am Grundzylinder (103) sind ein Bayonettelement (106), ein Auswurfsteg (111) und ein Schließsteg (115) angeformt oder befestigt.

Die Köpfe des Bayonettelements (106), des Auswurfstegs (111) und des Schließstegs (115) liegen auf einem Hüllzylinder (105), dessen Durchmesser z.B. 15,2 mm beträgt, vgl. Figur 4. Im Bereich zwischen der Außenwandung des Grundzylinders (103) und des Hüllzylinders (105) liegt ein als Teilzylinder (70) bezeichneter, gedachter Zylinder. Sein Durchmesser beträgt z.B. 14 mm.

Der Teilzylinder (70) ist in den Figuren 12 bis 20 in abgewickelter Form als Teil des Spindelkopfs (20) und des Werkzeughalters (90) dargestellt.

Das Bajonettelement (106) ist beispielsweise ein Abschnitt eines Gewindestegs, dessen Steigung z.B. 6 mm beträgt. Das im Ausführungsbeispiel gezeigte Bajonettelement (106) ist Teil eines Rechteckgewindes. Es kann auch Teil eines Trapez-, Säge-, Rund-, metrischen Gewindes oder dergleichen sein. Das Bajonettelement (106) überdeckt im Mittel 40 Winkelgrade des Teilzylinderumfanges. Die Stegbreite beträgt 2 mm, während die Steghöhe 2,1 mm misst. Die Mitte bzw. der Schwerpunkt des Bajonettelements (106) ist 2,5 mm von der Bodenfläche (104) entfernt.

Ggf. kann das Bajonettelement (106) auch als plattenartiger Steg gestaltet sein, dessen axial orientierte Flächen eben und nicht wendelförmig geformt sind. In diesem Fall wäre die Klemmflanke (52) durch eine ballig, z.B. sphärisch, gekrümmte Kontaktfläche zu ersetzen.

Nach Figur 4 befindet sich im Gegenuhrzeigersinn um z.B. 120 Winkelgrade versetzt der Auswurfsteg (111). Er hat eine - auf dem Teilzylinder (70) gemessene - mittlere Breite von 4,25 mm. Seine Höhe beträgt 6 mm. Die untere Stirnfläche des Auswurfstegs (111) endet an der Bodenfläche (104). In der Draufsicht, vgl. Figur 2 und die Figuren 12 bis 20, hat er beispielsweise eine rechteckige Außenkontur.

Um weitere 60 Winkelgrade im Gegenuhrzeigersinn versetzt, ist der Schließsteg (115) positioniert. Letzterer hat bei einer maximalen Breite von 4,3 mm eine maximale Höhe von 3,4 mm. Auch seine untere Stirnfläche endet an der Bodenfläche (104), vgl. Figur 6. Der Schließsteg (115) und der Auswurfsteg (111) haben zwei einander gegenüberliegende plane Seitenflächen (116, 112), die zueinander parallele Ebenen bilden, vgl. auch Figur 6. Die Seitenfläche (116) des Schließstegs (115) ist von einer nach Figur 6 horizontalen Mittenlängsebene (5) 1 mm entfernt, während der Abstand zwischen der Mittellängsebene (5) und der Seitenfläche (112) des Auswurfstegs (111) 2,5 mm beträgt. Zwischen den Seitenflächen (112, 116) befindet sich eine Planfläche (113), die parallel zur Mittellinie (99) und senkrecht zu den Seitenflächen (112, 116) orientiert ist. Sie hat zur Mittenlängsebene (6), vgl. Figur 4, einen Abstand von z.B. 5,6 mm.

In den Schließsteg (115) ist eine Ausrundung (117) eingearbeitet, die einen Radius von 3,4 mm hat. Die senkrecht zur Zeichnungsebene der Figur 6 ausgerichtete Mittellinie (119) der Ausrundung (117) ist von der Bodenfläche (104) 4,7 mm entfernt. Zugleich liegt sie 0,4 mm oberhalb der Mittenlängsebene (5).

Der Endabschnitt (127) ist ein im Wesentlichen zylindrischer Abschnitt, der in einer 0,5 x 30°-Fase endet. In axialer Richtung ist zwischen dem Endabschnitt (127) und der Bodenfläche (29) ein Spiel von z.B. 0,2 mm.

In den Figuren 1 und 2 sind der Spindelkopf (20) und der Werkzeughalter (90) in einer Explosionszeichnung dargestellt. Der Spindelkopf (20) und der Werkzeughalter (90) sind dabei nur linear auseinandergezogen. Eine für das Trennen des Werkzeughalters (90) vom Spindelkopf (20) erforderliche Drehung um die Mittellinie (9) ist nicht dargestellt. Allerdings ist die Exzenterschraube (60) in ihrer Offenstellung gezeichnet. Die Schließstellung ist in Figur 20 gezeigt.

Die Figuren 10 und 11 zeigen die aus dem Spindelkopf (20) und dem Werkzeughalter (90) bestehende Schnittstelle im Längs- und Querschnitt. Im Querschnitt, vgl. Figur 10, ist strichpunktiert der Teilzylinder (70) dargestellt. Der Teilzylinder (70) wird von den erhabenen, radial nach innen ragenden Teilen der Innenwandung (31) des Spindelkopfes (20) und den radial nach außen abstehenden Teilen (106, 111, 115) des Werkzeughalters (90) durchdrungen.

Wird von der Mittellinie (9) aus durch den Teilzylinder (70) nach außen geschaut und dieses zylindrische Abbild zu einem ebenen Bild abgewickelt, so entsteht eine Werkzeugaufnahmeabwicklung. Letztere wird als innere Abwicklung (71) bezeichnet. Wird umgekehrt von außen in Richtung der Mittellinie (9) auf den Teilzylinder (70) geblickt und das zylindrische Abbild hiervon zu einem ebenen Bild abgerollt, so entsteht eine Spindelabwicklung. Sie wird als äußere Abwicklung (72) bezeichnet. Der Anfang (A), das Ende (B) und die Richtung der Abwicklungen (71, 72) sind in den Figuren 12 und 13 dargestellt.

In den Figuren 12 bis 20 sind die beiden Abwicklungspaare (71, 72) jeweils in zueinander unterschiedlichen Positionen gezeigt, um den Vorgang des Herstellens der Schnittstelle erläutern zu können.

Nach der Figur 12 liegen die beiden ebenen Abwicklungen (71) und (72) noch voneinander getrennt vor. Der Werkzeughalter (90) ist noch nicht in den Spindelkopf (20) eingeführt. In der Abwicklung (71) sind unterhalb der gestrichelt gezeichneten Montagefuge (124) im Schnitt der Auswurfsteg (111), der Schließsteg (115) und das Bajonettelement (106) zu erkennen. Die Teile (115, 111) liegen an der als Strich dargestellten Bodenfläche (104) an. In der Abwicklung (72) sind zwischen der äußeren Stirnfläche (24) und der Zwischenbodenfläche (28) die Exzenterschraube (60), der Nutstollen (47) und der Sperrstollen (48) zu erkennen. Im Nutstollen (47) befindet sich die Haltenut (51) mit ihrer Klemmflanke (52).

In Figur 12 ist die Abwicklung (71) so vor der Abwicklung (72) positioniert, dass sich das Bajonettelement (106) der Abwicklung (71) ca. mittig vor der ersten Ausfräsung (42) befindet.

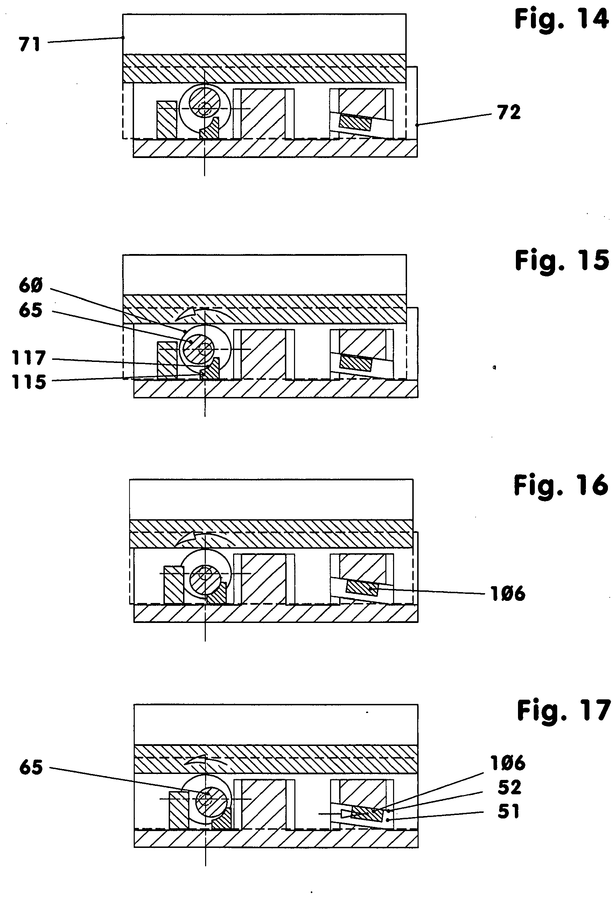

Gemäß Figur 13 ist der Werkzeughalter (90) linear in den Spindelkopf (20) eingeschoben. Die hintere Bundfläche (121) kommt an der Stirnfläche (24) zur Anlage. Das Bajonettelement (106) befindet sich in der ersten Ausfräsung (42). Wird nun der Werkzeughalter (90) über eine Rechtsdrehung im Spindelkopf (20) bewegt, wird das Bajonettelement (106) in die Haltenut (51) eingeschoben, vgl. Figur 14.

In Figur 15 wird die Exzenterschraube (60) in einer Rechtsdrehung um 90 Winkelgrade geschwenkt, so dass der Exzenterzapfen (65) - hier nach links - auswandert. Da in Figur 15 die Rechtsdrehung von der Rückseite aus erfolgt, erscheint sie in dieser Figur als Gegenuhrzeigerdrehung.

Gemäß Figur 16 legt sich nach einer weiteren Rechtsdrehung - um ca. 90 Winkelgrade - die Exzenterschraube (60) an der Ausrundung (117) des Schließstegs (115) an und schiebt zugleich das Bajonettelement (106) weiter in die Haltenut (51) hinein.

Nach einem Weiterdrehen der Exzenterschraube (60) um ca. 45 Winkelgrade hat sich das Bajonettelement (106) mit seiner Klemmflanke (107) an der Klemmflanke (52) der Haltenut (51) angelegt, vgl. Figur 17. Nun ist der Werkzeughalter (90) im Spindelkopf (20) an zwei einander fast gegenüberliegenden Punkten bzw. Linien oder Flächen festgeklemmt. Zum einen zieht das in der Haltenut (51) anliegende Bajonettelement (106) die hintere Bundfläche (121) gegen die Stirnfläche (24) des Spindelkopfes (20). Zum anderen ergibt sich eine vergleichbare Klemmwirkung durch die Anlage des Exzenterzapfens (65) am Schließsteg (115).

Zum Lösen des Werkzeughalters (90) wird die Exzenterschraube (60) von der Rückseite aus mit einer Linksdrehung bewegt, vgl. Figur 18. Hier ist die Bewegung eine Drehung im Uhrzeigerdrehsinn. Nach ca. 100 Winkelgraden kontaktiert der Exzenterzapfen (65) den Auswurfsteg (111). Durch die Linksverschiebung der Abwicklung (71) wird das Bajonettelement (106) von der Klemmflanke (52) der Haltenut (51) gelöst.

Wird nun unter einem axialen Zug nach oben der Werkzeughalter (90) in einer Linksdrehung weitergeschwenkt, stößt der Schließsteg (115) am z.B. komplett zurückgeschwenkten Exzenterzapfen (65) an, bevor das Bajonettelement (106) die Haltenut (51) vollständig verlassen hat. Der Werkzeughalter (90) befindet sich hier in einer mit Spiel behafteten Sperrlage, vgl. Figur 19. Würde der Werkzeughalter (90) beispielsweise über Kopf in einem vertikal positionierten, unten offenen Spindelkopf (20) montiert sein, könnte er trotz des Lösens der Klemmung nicht aus dem Spindelkopf (20) herausfallen.

Erst nach einer Weiterdrehung des Werkzeughalters (90) unter gleichzeitigem axialen Hineinschieben in den Spindelkopf (20) ist ein Herausziehen aus dem Spindelkopf (20) möglich, vgl. Figur 20. Sobald sich das Bajonettelement (106) zwischen den beiden Stollen (47) und (48) befindet, liegen auch die . Stege (111) und (115) zwischen dem Nutstollen (47) und dem Exzenterzapfen (65). Nun kann der Werkzeughalter (90) problemlos herausgehoben werden.

Um den Werkzeughalter (90) im Spindelkopf (20) festklemmen bzw. kuppeln zu können, wird er vor dem Einführen zuerst so positioniert, dass seine Markierungsnut (122), vgl. Figur (21), gegenüber der Markierungsnut (57) des Spindelkopfes (20) angeordnet ist. Hiernach wird er in einer geradlinigen Bewegung in den Spindelkopf (20) eingesteckt. Sobald in axialer Richtung ein Widerstand spürbar ist, wird der Werkzeughalter (90) um ca. 65 bis 75 Winkelgrade nach rechts geschwenkt, sodass das Bajonettelement (106) in die Haltenut (52) einschwenkt. Somit ist beim Klemmen bzw. Kuppeln mindestens einer der Stege (106, 115) an mindestens einem Hintergriff der Ausnehmung (30) zur Anlage bringbar.

In einem abschließenden Schritt wird die Exzenterschraube (60) mit Hilfe eines Drehmomentschlüssels um z.B. 225 Winkelgrade in einer Rechtsdrehung geschwenkt. Als maximales Drehmoment werden z.B. 10 Nm gewählt. Während ihrer axialen Zustellbewegung legt sich der Exzenterzapfen (65) am Schließsteg (115) an und verschwenkt hierbei den Werkzeughalter (90) noch um einige Winkelgrade oder Winkelminuten weiter. Der Exzenterzapfen (65) schiebt das Bajonettelement (106) tiefer in die Haltenut (52) hinein. Gleichzeitig drückt der Exzenterzapfen (65) durch seine Anlage am Schließsteg (115) über diesen ebenfalls den Werkzeughalter (90) in die Montagefugen (94) und (124). Da das Feingewinde der Exzenterschraube (60) aufgrund seiner großen Kontaktfläche im Gewindegang und aufgrund seiner geringen Gewindesteigung selbsthemmend in der Bohrung (49) sitzt, hält die Exzenterschraube (60) ihre Position.

Der Werkzeughalter (90) kann auch weg- bzw. winkelgesteuert im Spindelkopf (20) festgeklemmt werden, vgl. Figuren 2, 21 und 22. Dazu wird die Exzenterschraube (60), deren Markierungsnut (68), vgl. Figuren 2, 21 und 22, anfangs vor der mittellinienparallelen Markierungsnut (57) des Spindelkopfs (20) liegt, vgl. Figur 2, in einer Rechtsdrehung vor die andere Markierungsnut (58) des Spindelkopfs (20) geschwenkt, vgl. Figur 21.

Die eng tolerierte Anlage des werkzeughalterseitigen Endabschnitts (127) in der Bohrung (35) des Spindelkopfes (20) unterstützt zudem eine gleichförmige, verkantungsfreie Anlage der Bauteile (20, 90) in den Montagefugen (94) und (124). Der Werkzeughalter (90) sitzt nun spielfrei und wiederholgenau im Spindelkopf (20).

### Bezugszeichenliste:

- 5: Mittenlängsebene zwischen (111) und (115)
- 6: Mittenlängsebene, senkrecht zu (5)
- 9: Mittellinie der Schnittstelle

- 10: Gehäuse des Werkzeugaggregats
- 11: Schulterkugellager
- 12: Halteplatte
- 13: Deckel

- 15: Stirnfläche
- 16: Ringnut
- 17: Dichtring, O-Ring

- 20: Spindelkopf, erste Baugruppe
- 21: Spanngetriebeabschnitt
- 22: Außenwandung

- 24: Stirnfläche; Anlagefläche, Kontaktstelle
- 25: Spindelkopfschulter
- 26: Bundfläche, plan, rückseitig
- 28: Zwischenbodenfläche
- 29: Bodenfläche, innen

- 30: Ausnehmung, zentral
- 31: Innenwandung
- 32: Abschnitt, kegelstumpfmantelförmig, Innenkonus
- 35: Bohrung
- 39: Schaft

- 42: erste Ausfräsung
- 43: Zylindermantel
- 45: Mittellinie
- 46: zweite Ausfräsung; Langloch
- 47: Nutstollen
- 48: Sperrstollen
- 49: Gewindebohrung für Exzenterschraube

- 51: Haltenut
- 52: Klemmflanke von (51), Hintergriff
- 53: Flanke, unbelastet
- 57: Markierungsnut für Offenstellung, Markierung
- 58: Markierungsnut für Schließstellung, Markierung
- 59: Mittellinie

- 60: Exzenterschraube, Spannelement
- 61: Exzenterwelle mit Außengewinde M8 x 0,5
- 65: Exzenterzapfen, Zapfen
- 66: Mittellinie von (65)
- 67: Werkzeugausnehmung
- 68: Markierungsnut an (60), Markierung
- 69: Mittellinie von (60)

- 70: Teilzylinder
- 71: Abwicklung der Werkzeugaufnahme
- 72: Abwicklung des Spindelkopfes

- 90: Werkzeughalter, zweite Baugruppe
- 91: Flanschabschnitt
- 92: Stirnfläche, vorn
- 93: Stirnfläche, hinten
- 94: Montagefuge, zweite
- 95: Ausnehmung, Spannzangenausnehmung
- 96: Innengewindeabschnitt
- 97: Innenkonusabschnitt
- 98: Durchgangsgewindebohrung
- 99: Mittellinie
- 100: Zapfen
- 101: Verriegelungsabschnitt
- 102: Stirnfläche, plan
- 103: Grundzylinder
- 104: Bodenfläche
- 105: Hüllzylinder
- 106: Bayonettelement, Steg, Gewindeabschnitt
- 107: Klemmflanke von (106)

- 111: Auswurfsteg
- 112: Seitenfläche
- 113: Planfläche zwischen (112) und (116)
- 115: Schließsteg, Steg
- 116: Seitenfläche
- 117: Ausrundung
- 119: Mittellinie

- 120: Außenkonusabschnitt; Abschnitt, kegelstumpfförmig
- 121: Anlagefläche, Bundfläche, plan
- 122: Markierungsnut an (91)
- 124: Montagefuge, erste
- 127: Endabschnitt, zylindrischer Bolzen

- 130: Spannzange

- 137: Spannschraubring
- 138: Außengewinde
- 139: Mitnehmer

- 140: Werkzeug; Spiralbohrer, z.B. innengekühlt

## Patentansprüche

1. Schnittstelle aus einer ersten - ein Werkzeug oder einen Werkzeughalter haltenden - Baugruppe (20) und einer zweiten - ein Bearbeitungselement tragenden - Baugruppe (90),
- wobei die erste Baugruppe (20) zum einen eine Ausnehmung (30) besitzt, die mindestens einen kegelstumpfmantel- oder zylinderförmigen Abschnitt (32) hat und zum anderen eine in axialer Richtung - in Richtung der zweiten Baugruppe (90) - wirkende Anlagefläche (24) oder Kontaktstelle aufweist,
- wobei die zweite Baugruppe (90) einen Zapfen (100) hat, der zum einen einen kegel-, kegelstumpf- oder zylinderförmigen Abschnitt (120) zur Anlage am kegelstumpfmantel- oder zylinderförmigen Abschnitt (32) der ersten Baugruppe (20) besitzt und zum anderen mindestens eine in axialer Richtung wirkende Kontaktstelle oder Anlagefläche (121) zur Kontaktierung der Anlagefläche (24) oder Kontaktstelle der ersten Baugruppe (20) aufweist,
- wobei zwischen der Ausnehmung (30) und dem Zapfen (100) ein bajonettartiger Verschluss mit mindestens einem - am Zapfen (100) vorhandenen - Steg (106, 115) angeordnet ist, **dadurch gekennzeichnet, dass** in der ersten Baugruppe (20) ein Spannelement (60) angeordnet ist, dessen vorderes Ende beim Spannen an einem der Stege (106, 115) zur Anlage kommt, und dass das Spannelement (60) eine Exzenterschraube ist.

2. Schnittstelle gemäß Anspruch 1, **dadurch gekennzeichnet, dass** mindestens einer der Stege (106, 115) ein gewindeabschnittförmiges Bajonettelement ist, das eine Steigung von 5 bis 8 mm aufweist und eine Länge hat, die 10 bis 60 Winkelgrade des 360 Winkelgradumlaufes überdeckt.

3. Schnittstelle gemäß Anspruch 2, **dadurch gekennzeichnet, dass** das Bajonettelement (106) rechtssteigend ist.

4. Schnittstelle gemäß Anspruch 2, **dadurch gekennzeichnet, dass** der Querschnitt des Bajonettelements (106) ein Rechteck, ein Trapez oder Dreieck ist, wobei beim Trapez die längere Basisseite in der dortigen Zapfenoberfläche liegt.

5. Schnittstelle gemäß Anspruch 1, **dadurch gekennzeichnet, dass** der Zapfen (100) als dritten Steg (111) einen Auswurfsteg aufweist, an dessen der Exzenterschraube (60) zugewandten Flanke (112) die Exzenterschraube (60) beim Lösen der zweiten Baugruppe (20) zur Anlage kommt.

6. Schnittstelle gemäß Anspruch 1, **dadurch gekennzeichnet, dass** die Exzenterschraube (60) einen Exzenterzapfen (65) aufweist und zwischen einer Löse- und Klemmposition einen Schwenkwinkel von 180 bis 270 Winkelgraden benötigt.

7. Schnittstelle gemäß Anspruch 1, **dadurch gekennzeichnet, dass** der zwischen den Stegen (106) und (115) gelegene Abstand kleiner ist als der Außendurchmesser des Exzenterzapfens (65) der Exzenterschraube (60).

8. Schnittstelle gemäß Anspruch 1, **dadurch gekennzeichnet, dass** der hintere Bereich der Ausnehmung (30) der ersten Baugruppe (20) - zur Aufnahme eines zylindrischen Bolzens (127) der zweiten Baugruppe (90) - eine zylindrische Bohrung (35) aufweist, wobei das Spiel zwischen dem Bolzen (127) und der Bohrung (35) kleiner als 0,1 mm ist.

9. Schnittstelle gemäß Anspruch 1, **dadurch gekennzeichnet, dass** die erste Baugruppe (20) ein Spindelkopf ist, während die zweite Baugruppe (90) ein Werkzeughalter ist.

## Claims

1. Interface consisting of a first assembly (20) holding a tool or a tool holder and a second assembly (90) supporting a machining element,
- wherein the first assembly (20) has, on the one hand, a recess (30) which has at least one truncated conical or cylindrical section (32) and on the other hand a contact surface (24) or contact point acting in an axial direction - in the direction of the second assembly (90),
- wherein the second assembly (90) has a pin (100) which, on the one hand, has a conical, truncated conical or cylindrical section (120) designed to rest against the truncated conical or cylindrical section (32) of the first assembly (20) and on the other hand has at least one contact point or contact surface (121) acting in an axial direction designed to contact the contact surface (24) or contact point of the first assembly (20),
- wherein a bayonet-like closure with at least one web (106, 115) located on the pin (100) is arranged between the recess (30) and the pin (100), **characterised in that** a clamping element (60) is arranged in the first assembly (20), the front end of which comes to rest against one of the webs (106, 115) when clamped,
and that the clamping element (60) is an eccentric screw.

2. Interface according to claim 1, **characterised in that** at least one of the webs (106, 115) is a bayonet element, shaped like a section of a thread, with a pitch of up to 8 mm and with a length covering 10 to 60 angular degrees of the 360 angular degree circumference.

3. Interface according to claim 2, **characterised in that** the bayonet element (106) is right-handed.

4. Interface according to claim 2, **characterised in that** the cross-section of the bayonet element (106) is a rectangle, a trapezoid or a triangle, wherein in the case of the trapezoid the longer base side lies in the pin surface there.

5. Interface according to claim 1, **characterised in that** the pin (100) has an ejection web as the third web (111), on the flank (112) of which facing the eccentric screw (60) the eccentric screw (60) comes to rest when the second assembly (20) is released.

6. Interface according to claim 1, **characterised in that** the eccentric screw (60) has an eccentric pin (65) and requires a swivel angle of 180 to 270 angular degrees between a release position and clamping position.

7. Interface according to claim 1, **characterised in that** the distance between the webs (106) and (115) is smaller than the outer diameter of the eccentric pin (65) of the eccentric screw (60).

8. Interface according to claim 1, **characterised in that** the rear region of the recess (30) of the first assembly (20) - for receiving a cylindrical bolt (127) of the second assembly (90) - has a cylindrical bore (35), wherein the clearance between the bolt (127) and the bore (35) is less than 0.1 mm.

9. Interface according to claim 1, **characterised in that** the first assembly (20) is a spindle head, while the second assembly (90) is a tool holder.

## Revendications

1. Interface composée d'un premier ensemble (20) portant un outil ou un porte-outil, et d'un second ensemble (90) portant un élément d'usinage,
- dans laquelle le premier ensemble (20) possède d'une part un évidement (30), qui comprend au moins une section (32) de forme tronconique ou cylindrique et présente d'autre part une surface d'appui (24) ou un point de contact agissant dans la direction axiale, en direction du second ensemble (90),
- dans laquelle le second ensemble (90) comprend un tourillon (100), qui possède d'une part une section (120) de forme conique, tronconique ou cylindrique pour s'appliquer contre la section (32) de forme tronconique ou cylindrique du premier ensemble (20), et présente d'autre part au moins un point de contact ou une surface d'appui (121) agissant dans la direction axiale pour entrer en contact avec la surface d'appui (24) ou le point de contact du premier ensemble (20),
- dans laquelle une fermeture en forme de baïonnette avec au moins une traverse (106, 115), présente sur le tourillon (100), est disposée entre l'évidement (30) et le tourillon (100),
**caractérisée en ce que**
un élément de serrage (60) est disposé dans le premier ensemble (20) dont l'extrémité avant vient s'appliquer contre l'une des traverses (106, 115) lors du serrage,
et **en ce que** l'élément de serrage (60) est une vis excentrique.

2. Interface selon la revendication 1, **caractérisée en ce qu'**au moins une des traverses (106, 115) est un élément de baïonnette en forme de section filetée présentant une inclinaison de 5 à 8 mm et ayant une longueur couvrant 10 à 60 degrés du tour de 360 degrés.

3. Interface selon la revendication 2, **caractérisée en ce que** l'élément de baïonnette (106) monte à droite.

4. Interface selon la revendication 2, **caractérisée en ce que** la section transversale de l'élément de baïonnette (106) est un rectangle, un trapèze ou un triangle, dans laquelle le côté de base le plus long dans le cas du trapèze se situe à la surface de tourillon.

5. Interface selon la revendication 1, **caractérisée en ce que** le tourillon (100) présente comme troisième traverse (111) une traverse d'éjection contre le flanc (112) de laquelle, tourné vers la vis excentrique (60), la vis excentrique (60) vient s'appliquer lors du desserrage du second sous-ensemble (20).

6. Interface selon la revendication 1, **caractérisée en ce que** la vis excentrique (60) comprend un tourillon excentrique (65) et nécessite un angle de pivotement de 180 à 270 degrés entre une position de desserrage et une position de serrage.

7. Interface selon la revendication 1, **caractérisée en ce que** la distance située entre les traverses (106) et (115) est inférieure au diamètre extérieur du tourillon excentrique (65) de la vis excentrique (60).

8. Interface selon la revendication 1, **caractérisée en ce que** la zone arrière de l'évidement (30) du premier ensemble (20), permettant de recevoir un boulon cylindrique (127) du second ensemble (90), présente un alésage cylindrique (35), dans lequel le jeu entre le boulon (127) et l'alésage (35) est inférieur à 0,1 mm.

9. Interface selon la revendication 1, **caractérisée en ce que** le premier ensemble (20) est une tête de broche, tandis que le second ensemble (90) est un porte-outil.
